# EUROPEAN PATENT SPECIFICATION

(11) **EP 2 980 156 B1**
(45) Date of publication and mention of the grant of the patent: **16.05.2018**
(21) Application number: 14773914.8
(22) Date of filing: 12.03.2014
(51) Int. Cl.: C08L 67/00, C08K 5/29, C08L 79/00

(54) **ESTER-TYPE RESIN COMPOSITION, METHOD FOR PRODUCING SAID ESTER-TYPE RESIN COMPOSITION, AND MOLDED ARTICLE PRODUCED USING SAID ESTER-TYPE RESIN**
ESTER-HARZ-ZUSAMMENSETZUNG, VERFAHREN ZUR HERSTELLUNG DIESER ESTER-HARZ-ZUSAMMENSETZUNG UND UNTER VERWENDUNG DIESER ESTER-HARZ-ZUSAMMENSETZUNG HERGESTELLTER FORMKÖRPER
COMPOSITION DE RÉSINE DE TYPE ESTER, PROCÉDÉ DE PRODUCTION DE LADITE COMPOSITION DE RÉSINE DE TYPE ESTER ET ARTICLE MOULÉ PRODUIT À L'AIDE DE LA RÉSINE DE TYPE ESTER

(30) Priority: 28.03.2013 JP 2013070388
(43) Date of publication of application: 03.02.2016
(73) Proprietor: Nisshinbo Chemical Inc., Chuo-ku Tokyo 103-8650 (JP)
(72) Inventor: ITOH, Takahiko, Chiba-shi Chiba 267-0056 (JP); YAMAZAKI, Yoshihiro, Chiba-shi Chiba 267-0056 (JP); TANIGUCHI, Akira, Chiba-shi Chiba 267-0056 (JP); KOTANI, Saori, Chiba-shi Chiba 267-0056 (JP)
(74) Representative: Leifert & Steffan
(86) International application number: PCT/JP2014/056498
(87) International publication number: WO 2014/156652

(56) References cited:
- EP-A1- 1 710 277
- EP-A1- 2 947 119
- EP-A1- 2 947 120
- WO-A1-2011/122080
- JP-A- H0 717 939
- JP-A- H1 180 522
- JP-A- H09 208 649
- JP-A- H09 296 097
- JP-A- 2008 231 283
- JP-A- 2012 036 391

## Description

### Technical Field

The present invention relates to an ester-based resin composition obtained by compounding a carbodiimide-based compound in an ester-based resin, a process for producing the ester-based resin composition, and a molded article using the ester-based resin.

### Background Art

Ester-based resins, for example, polyethylene terephthalate (PET), polybutylene terephthalate (PBT), etc., have been used in various application fields because they are excellent in elasticity and moldability.

However, the ester-based resins are likely to readily undergo hydrolysis of an ester group contained in a molecule thereof owing to the presence of moisture or the like to thereby cause reduction in a molecular weight thereof. It is also known that the ester-based resins have the following problem. That is, a carboxy group as an acid group produced upon hydrolysis of the ester-based resins further promotes hydrolysis of an ester bond therein, so that the ester-based resins tend to be deteriorated in strength. Furthermore, the ester-based resins themselves which have such a deteriorated strength can no longer resist against distortion generated upon curing of the resins, and tend to suffer from occurrence of cracks or further deterioration in strength.

As a method for suppressing hydrolysis of the ester-based resins, there is known the method as described in PTL1 in which a hydrolysis stabilizer constituted of a carbodiimide-based compound is added to the ester-based resins.

As described in PTL1, by molding a composition prepared by compounding the carbodiimide-based compound in the ester-based resins, it is possible to capture a carboxy group contained in the ester-based resins or a carboxy group produced by decomposition of an ester group upon kneading the resins at an elevated temperature, and suppress deterioration in initial characteristics of a molded article obtained from the composition.

However, the composition prepared by adding the carbodiimide-based compound into the ester-based resins tends to suffer from rapid reaction between a carboxy group in the ester-based resins and a carbodiimide group when melt-kneading the composition and then molding the kneaded material. As a result, there tends to occur such a problem that the composition suffers from increase in melt viscosity and deterioration in processing suitability.

As a method of suppressing increase in melt viscosity of the resin composition and improving a processing suitability thereof upon molding, there may be mentioned the method as described in PTL2 in which a plasticizer such as a phthalic acid ester is added to the resin composition.

### Citation List

### Patent Literature

PTL1: JP 9-296097A
PTL2: JP 2002-53742A

### Summary of Invention

### Technical Problem

However, the plasticizer has no reactivity with a carboxy group, and therefore tends to cause problems such as dilution of a hydrolysis resistance-imparting effect of the carbodiimide-based compound against the ester-based resins as well as occurrence of bleeding of the plasticizer.

Accordingly, an object of the present present invention is to provide an ester-based resin composition having a hydrolysis resistance which is free of considerable increase in melt viscosity and solution viscosity, a process for producing the ester-based resin composition, and a molded article using the ester-based resin.

### Solution to Problem

As a result of the present inventors' earnest and intense studies for achieving the above object, it has been found that when compounding specific amounts of specific two kinds of polycarbodiimides into the ester-based resins, it is possible to solve the above conventional problems. The present invention has been accomplished by the above finding.

Thus, in accordance with the present invention, there are provided the following ester-based resin composition, the following process for producing the ester-based resin composition, and the following molded article using the ester-based resin.
[1] An ester-based resin composition including an ester-based resin, an aliphatic polycarbodiimide other than a xylylene-based aliphatic polycarbodiimide, and a xylylene-based polycarbodiimide,
   wherein the aliphatic polycarbodiimide other than the xylylene-based aliphatic polycarbodiimide is a polycarbodiimide containing at least two carbodiimide groups in a molecule thereof and being derived from at least one kind of an aliphatic diisocyanate compound other than a xylylene-based aliphatic diisocyanate compound, the aliphatic diisocyanate compound being an isocyanate compound containing two isocyanate groups in a molecule thereof which are directly bonded to carbon atoms other than those carbon atoms present in an aromatic ring,
   wherein the xylylene-based polycarbodiimide comprises a repeating unit represented by the following general formula (2): 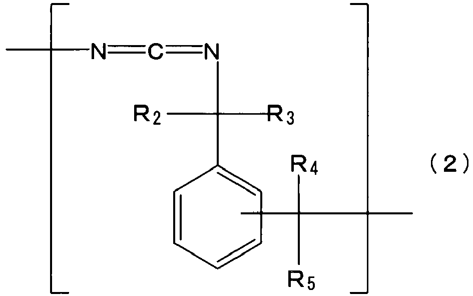 wherein R₂ to R₅ are respectively hydrogen, a methyl group or an ethyl group, and may be the same or different from each other, and
   wherein a mass ratio of the aliphatic polycarbodiimide other than a xylylene-based aliphatic polycarbodiimide to the xylylene-based polycarbodiimide [(aliphatic polycarbodiimide other than xylylene-based aliphatic polycarbodiimide)/(xylylene-based polycarbodiimide)] being from 0.1 to 10.0.
[2] The ester-based resin composition according to the above [1], wherein the aliphatic polycarbodiimide other than a xylylene-based aliphatic polycarbodiimide includes a repeating unit represented by the following general formula (1): 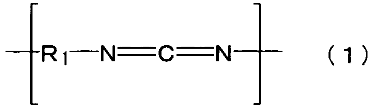 wherein R₁ is a residue formed by removing an isocyanate group from an aliphatic diisocyanate compound other than xylylene diisocyanate.
[3] The ester-based resin composition according to any one of the above [1] or [2], wherein the aliphatic polycarbodiimide other than a xylylene-based aliphatic polycarbodiimide and the xylylene-based polycarbodiimide are compounded in a total amount of from 0.1 to 10 parts by mass on the basis of 100 parts by mass of the ester-based resin.
[4] The ester-based resin composition according to any one of the above [1] to [3], wherein the ester-based resin is at least one resin selected from the group consisting of polyethylene terephthalate, polybutylene terephthalate, polylactic acid, polybutylene succinate and a polyhydroxyalkanoic acid.
[5] A process for producing an ester-based resin composition, including the steps of:
   compounding an aliphatic polycarbodiimide other than a xylylene-based aliphatic polycarbodiimide and a xylylene-based polycarbodiimide into an ester-based resin,
      wherein the aliphatic polycarbodiimide other than a xylylene-based aliphatic polycarbodiimide and the xylylene-based polycarbodiimide are both defined as in the above [1],
      such that a mass ratio of the aliphatic polycarbodiimide other than a xylylene-based aliphatic polycarbodiimide to the xylylene-based polycarbodiimide [(aliphatic polycarbodiimide other than xylylene-based aliphatic polycarbodiimide)/(xylylene-based polycarbodiimide)] is from 0.1 to 10.0; and
   melting and kneading a mixture obtained after the compounding.
[6] A molded article using the ester-based resin composition according to any one of the above [1] to [4].

Meanwhile, the "ester-based resin" as used in the present invention means a "resin containing an ester group".

### Advantageous Effects of Invention

The ester-based resin composition, the process for producing the ester-based resin composition and the molded article using the ester-based resin according to the present invention can exhibit a good hydrolysis resistance and can be prevented from suffering from considerable increase in melt viscosity and solution viscosity thereof. As a result, it is possible to prevent deterioration in performance of the molded article obtained from the ester-based resin composition as well as deterioration in processing suitability and handling property of the resin composition.

### Description of Embodiments

### [Ester-Based Resin Composition]

The ester-based resin composition of the present invention is prepared by compounding an ester-based resin, an aliphatic polycarbodiimide other than a xylylene-based aliphatic polycarbodiimide as defined above, and a xylylene-based polycarbodiimide as defined above, in which a mass ratio of the aliphatic polycarbodiimide other than a xylylene-based aliphatic polycarbodiimide to the xylylene-based polycarbodiimide [(aliphatic polycarbodiimide other than xylylene-based aliphatic polycarbodiimide)/(xylylene-based polycarbodiimide)] is from 0.1 to 10.0.

### (Ester-Based Resin)

The ester-based resin used in the present invention is not particularly limited as long as it is a resin having an ester group.

The ester-based resin may be produced, for example, by a condensation reaction between a dihydroxy compound and a dicarboxylic acid. Examples of the dihydroxy compound include those compounds selected from the group consisting of an aliphatic glycol such as ethylene glycol, propylene glycol, diethylene glycol, 1,4-butanediol, neopentyl glycol and hexamethylene glycol; an alicyclic glycol such as cyclohexane dimethanol; an aromatic dihydroxy compound such as bisphenol; and a mixture of any two or more thereof. Examples of the dicarboxylic acid include those compounds selected from the group consisting of an aromatic dicarboxylic acid such as terephthalic acid, isophthalic acid and 2,6-naphthalenedicarboxylic acid; an aliphatic dicarboxylic acid such as oxalic acid, succinic acid, adipic acid, sebacic acid and undecadicarboxylic acid; an alicyclic dicarboxylic acid such as hexahydrodicarboxylic acid; and a mixture of any two or more thereof.

In addition, the ester-based resin may also be produced by a ring opening polymerization of lactides as cyclic diesters or lactones as cyclic esters.

These ester-based resins may be modified with other components such as epoxy resins.

In the present invention, among these ester-based resins, preferred is at least one resin selected from the group consisting of polyethylene terephthalate, polybutylene terephthalate, polylactic acid, polybutylene succinate and polyhydroxyalkanoic acids.

The content of the ester-based resin in the ester-based resin composition is preferably not less than 80% by mass, more preferably from 90 to 99.9% by mass, and still more preferably from 95 to 99.5% by mass.

### (Aliphatic Polycarbodiimide other than Xylylene-Based Aliphatic Polycarbodiimide)

The aliphatic polycarbodiimide other than a xylylene-based aliphatic polycarbodiimide (hereinafter also referred to merely as an "aliphatic polycarbodiimide") is a polycarbodiimide derived from an aliphatic diisocyanate compound other than a xylylene-based aliphatic diisocyanate compound, that is, an aliphatic polycarbodiimide containing at least two carbodiimide groups in a molecule thereof which may be synthesized using at least one kind of aliphatic diisocyanate compound other than a xylylene-based aliphatic diisocyanate compound as a raw material.

The aliphatic diisocyanate compound as used herein means an isocyanate compound containing two isocyanate groups in a molecule thereof which are directly bonded to carbon atoms other than those carbon atoms present in an aromatic ring. Therefore, even though the aliphatic polycarbodiimide contains any aromatic ring in a molecule thereof, the compound is regarded as the aliphatic carbodiimide according to the present invention as long as the compound is other than a xylylene-based compound.

The aliphatic polycarbodiimide is excellent in reactivity with a carboxylic acid group present at a terminal end of the ester-based resin, and therefore is capable of enhancing a hydrolysis resistance of the ester-based resin composition when compounded in the ester-based resin. In addition, the aliphatic polycarbodiimide having such an excellent reactivity is capable of contributing to enhancement in hydrolysis resistance of the ester-based composition, in particular, in an early stage thereof.

As the aliphatic polycarbodiimide, there may be mentioned, for example, those compounds containing a repeating unit represented by the following general formula (1). 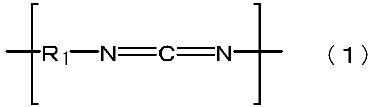 wherein R₁ is a residue formed by removing an isocyanate group from an aliphatic diisocyanate compound other than xylylene diisocyanate.

The aliphatic polycarbodiimide represented by the above general formula (1) may be produced by various methods. For example, there may be mentioned the method in which an organic diisocyanate compound is subjected to a condensation reaction accompanied with decarboxylation to produce an isocyanate-terminated polycarbodiimide (USP 2,941,956, JP 47-33279B, "J. Org. Chem.", 28, 2069-2075 (1963), and "Chemical Review", 1981, Vol. 81, No. 4, pp. 619-621).

As the organic diisocyanate as the raw material for synthesis of the aliphatic polycarbodiimide represented by the above general formula (1), there may be used aliphatic diisocyanates other than xylylene diisocyanate. Specific examples of the organic diisocyanate include hexamethylene diisocyanate, cyclohexane-1,4-diisocyanate, isophorone diisocyanate, dicyclohexyl methane-4,4'-diisocyanate and methyl cyclohexane diisocyanate. Of these organic diisocyanates, from the viewpoint of enhancing a hydrolysis resistance of the polyester-based resin, preferred is dicyclohexyl methane-4,4'-diisocyanate.

The average degree of polymerization of the aliphatic polycarbodiimide may be controlled by stopping the polymerization reaction in the midcourse by cooling, etc. In such a case, the resulting aliphatic polycarbodiimide has an isocyanate end group.

In addition, by end-capping all or part of the isocyanate end groups remaining in the polycarbodiimide compound using an end-capping agent, it is also possible to control an average degree of polymerization of the aliphatic polycarbodiimide. The well-controlled average degree of polymerization of the aliphatic polycarbodiimide is preferred from the viewpoint of a high quality of the resulting composition because it is possible to improve a compatibility of the aliphatic polycarbodiimide with the ester-based resin and enhance a storage stability of the composition.

The average degree of polymerization of the aliphatic polycarbodiimide is preferably from 2 to 30, and more preferably from 3 to 20. When controlling the average degree of polymerization of the aliphatic polycarbodiimide to 2 or more, it is possible to attain a sufficient hydrolysis resistance of the resulting composition. Whereas, when controlling the average degree of polymerization of the aliphatic polycarbodiimide to 30 or less, the resulting composition can be effectively prevented from suffering from solidification of the obtained reaction product upon synthesis of the carbodiimide and occurrence of gelation thereof.

As the end-capping agent, there may be first mentioned monoisocyanates.

Examples of the monoisocyanates include phenyl isocyanate, tolyl isocyanate, dimethylphenyl isocyanate, cyclohexyl isocyanate and butyl isocyanate.

When the isocyanate end group of the polycarbodiimide represented by the above general formula (1) is end-capped with the monoisocyanate, it is possible to obtain a carbodiimide represented by the following general formula (a). 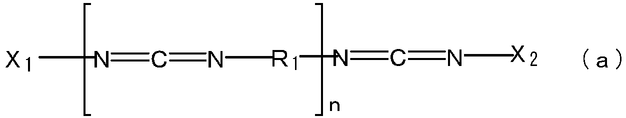 wherein R₁ is a residue formed by removing an isocyanate group from an aliphatic diisocyanate compound other than xylylene diisocyanate; X₁ and X₂ are respectively a residue formed by removing an isocyanate group from a monoisocyanate, and may be the same or different from each other; and n is an integer of 1 or more.

In the general formula (a), n is preferably an integer of from 2 to 30, and more preferably from 3 to 20.

In the case where the terminal end of the carbodiimide is end-capped with the monoisocyanate, in order to obtain the carbodiimide having a desired molecular weight, it is more convenient that the monoisocyanate is preliminarily mixed with the diisocyanate for conducting carbodiimidation thereof, because the amount of a monocarbodiimide produced by condensation between molecules of the monoisocyanate can be suppressed.

Examples of the other end-capping agent usable herein include active hydrogen compounds capable of reacting with an isocyanate, for example, (i) aliphatic, aromatic or alicyclic compounds having a -OH group, such as methanol, ethanol, phenol, cyclohexanol, N-methyl ethanol amine, polyethylene glycol monomethyl ether and polypropylene glycol monomethyl ether; (ii) aliphatic, aromatic or alicyclic compounds having a =NH group, such as diethyl amine and dicyclohexyl amine; (iii) aliphatic, aromatic or alicyclic compounds having a -NH₂ group, such as butyl amine and cyclohexyl amine; (iv) aliphatic, aromatic or alicyclic compounds having a -COOH group, such as succinic acid, benzoic acid and cyclohexanoic acid; (v) aliphatic, aromatic or alicyclic compounds having a -SH group, such as ethyl mercaptan, allyl mercaptan and thiophenol; (vi) epoxy group-containing compounds; (vii) acetic anhydride, methyltetrahydrophthalic anhydride and methylhexahydrophthalic anhydride; and the like.

When the isocyanate end group of the polycarbodiimide represented by the above general formula (1) is end-capped with the above other end-capping agent (i.e., an end-capping agent other than monoisocyanates), it is possible to obtain a polycarbodiimide represented by the following general formula (b). 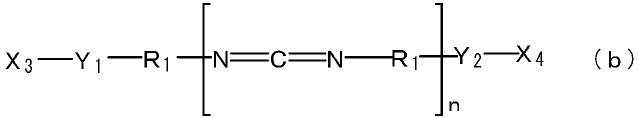 wherein R₁ is a residue formed by removing an isocyanate group from an aliphatic diisocyanate compound other than xylylene diisocyanate; X₃ and X₄ are respectively a residue of a compound obtained by reacting an isocyanate group with a monofunctional compound having a group capable of reacting with an isocyanate group, and may be the same or different from each other; Y₁ and Y₂ are respectively a group formed by reacting an isocyanate group with the monofunctional compound having a group capable of reacting with an isocyanate group, and may be the same or different from each other; and n is an integer of 2 or more.

In the general formula (b), n is preferably an integer of from 2 to 30, and more preferably from 3 to 20.

In the case where the terminal end of the carbodiimide is end-capped with any of the end-capping agents exemplified in the above (i) to (vii), the reaction between the isocyanate and these end-capping agents may be carried out either before the carbodiimidation or after causing the carbodiimidation to proceed until reaching an appropriate degree of polymerization of the aliphatic polycarbodiimide.

### (Xylylene-Based Polycarbodiimide)

The xylylene-based polycarbodiimide comprises a repeating unit represented by the following general formula (2): 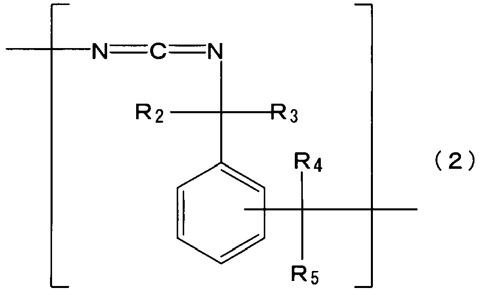 wherein R₂ to R₅ are respectively hydrogen, a methyl group or an ethyl group, and may be the same or different from each other, and
is derived from a xylylene-based diisocyanate compound, more specifically, a xylylene-based polycarbodiimide having at least two carbodiimide groups in a molecule thereof which may be synthesized using at least one kind of xylylene-based diisocyanate compound as a raw material.

The xylylene-based polycarbodiimide is kept in a liquid state at room temperature. Therefore, when compounding the xylylene-based polycarbodiimide into the ester-based resin, it is possible to reduce a melt viscosity or a solution viscosity of the resulting ester-based resin composition. In addition, the xylylene-based polycarbodiimide has a lower reactivity than the aliphatic polycarbodiimide, but can be reacted with a carboxylic acid. That is, the xylylene-based polycarbodiimide is capable of enhancing a hydrolysis resistance of the ester-based resin composition in an early stage or subsequent stages in which the aliphatic carbodiimide has been consumed. More concretely, the xylylene-based polycarbodiimide is mainly reacted with a carboxylic acid produced by hydrolysis of an ester group of the ester-based resin, and is capable of suppressing occurrence of further hydrolysis thereof.

Thus, according to the present invention, by using the two kinds of polycarbodiimides in combination with each other, it is possible to enhance a hydrolysis resistance of the ester-based resin composition in an early stage and subsequent stages, and further prevent considerable increase in melt viscosity or solution viscosity of the ester-based resin composition owing to a plasticizing effect of the xylylene-based polycarbodiimide.

As the xylylene-based polycarbodiimide, those compounds containing a repeating unit represented by the following general formula (2): 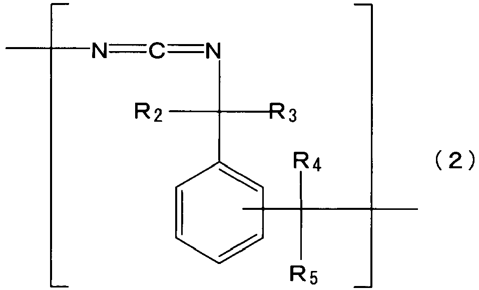 wherein R₂ to R₅ are respectively hydrogen, a methyl group or an ethyl group, and may be the same or different from each other are used.

The xylylene-based polycarbodiimide having the repeating unit represented by the above general formula (2) may be produced by the same method as described above except for using a xylylene-based diisocyanate compound as a raw material.

Examples of the xylylene-based diisocyanate compound include m-xylylene diisocyanate, p-xylene diisocyanate, m-tetramethyl xylylene diisocyanate and p-tetramethyl xylene diisocyanate. Of these xylylene-based diisocyanate compounds, from the viewpoint of enhancing a hydrolysis resistance of the polyester-based resin, preferred is m-tetramethyl xylylene diisocyanate.

The average degree of polymerization of the xylylene-based polycarbodiimide may be controlled by stopping the polymerization reaction in the midcourse by cooling, etc. In such a case, the resulting xylylene-based polycarbodiimide has an isocyanate end group.

In addition, similarly to the aforementioned aliphatic polycarbodiimide according to the present invention, by end-capping all or part of the isocyanate end groups remaining in the xylylene-based polycarbodiimide compound using an end-capping agent, it is also possible to control an average degree of polymerization of the xylylene-based polycarbodiimide. The well-controlled average degree of polymerization of the xylylene-based polycarbodiimide is preferred from the viewpoint of a high quality of the resulting composition because it is possible to improve a compatibility of the xylylene-based polycarbodiimide with the ester-based resin and enhance a storage stability of the composition.

The average degree of polymerization of the xylylene-based polycarbodiimide is preferably from 2 to 100, more preferably from 2 to 60, and still more preferably from 3 to 20. When controlling the average degree of polymerization of the xylylene-based polycarbodiimide to 2 or more, the xylylene-based polycarbodiimide can be effectively prevented from suffering from bleeding thereof from the obtained molded article, and the resulting composition can exhibit a good hydrolysis resistance. Whereas, when controlling the average degree of polymerization of the xylylene-based polycarbodiimide to 100 or less, the resulting composition can readily exhibit a good plasticizing effect.

As the end-capping agent for the xylylene-based polycarbodiimide, there may be used the same end-capping agents as used for the aliphatic polycarbodiimide.

In the case where the terminal end of the carbodiimide is end-capped with any of the end-capping agents, the reaction between the isocyanate and the end-capping agent may be carried out either before the carbodiimidation or after causing the carbodiimidation to appropriately proceed until reaching a certain degree of polymerization of the xylylene-based polycarbodiimide.

When the isocyanate end group of the xylylene-based polycarbodiimide having the repeating unit represented by the above general formula (2) is end-capped with a monoisocyanate, it is possible to obtain a polycarbodiimide represented by the following general formula (c). 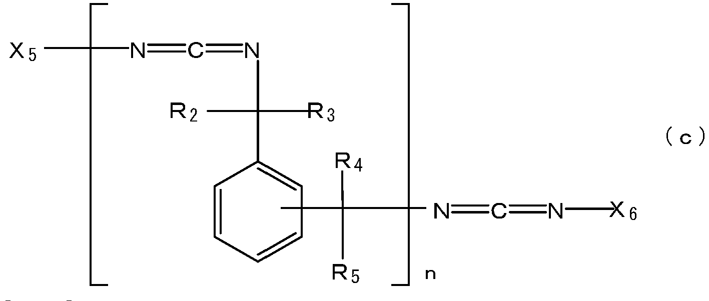 wherein R₂ to R₅ are respectively hydrogen, a methyl group or an ethyl group, and may be the same or different from each other; X₅ and X₆ are respectively a residue formed by removing an isocyanate group from a monoisocyanate, and may be the same or different from each other; and n is an integer of 2 or more.

In the general formula (c), n is preferably an integer of from 1 to 100, more preferably from 1 to 60, and still more preferably from 2 to 15.

When the isocyanate end group of the xylylene-based polycarbodiimide having the repeating unit represented by the above general formula (2) is end-capped with the above other end-capping agent (i.e., an end-capping agent other than monoisocyanates), it is possible to obtain a polycarbodiimide represented by the following general formula (d). 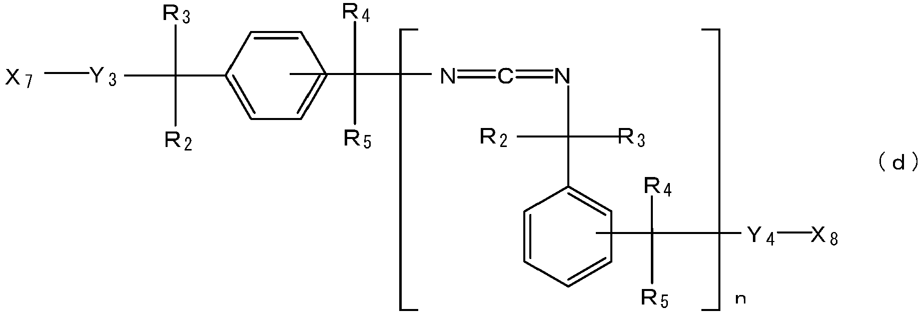 wherein R₂ to R₅ are respectively hydrogen, a methyl group or an ethyl group, and may be the same or different from each other; X₇ and X₈ are respectively a residue of a compound obtained by reacting an isocyanate group with a monofunctional compound having a group capable of reacting with an isocyanate group, and may be the same or different from each other; Y₃ and Y₄ are respectively a group formed by reacting an isocyanate group with the monofunctional compound having a group capable of reacting with an isocyanate group, and may be the same or different from each other; and n is an integer of 2 or more.

In the general formula (d), n is preferably an integer of from 2 to 100, more preferably from 2 to 60, and still more preferably from 3 to 15.

The ester-based resin composition of the present invention is characterized by compounding the two kinds of polycarbodiimides, i.e., the aforementioned aliphatic polycarbodiimide and xylylene-based polycarbodiimide into the ester-based resin. For this reason, the ester-based resin composition of the present invention can exhibit such a remarkable effect that a melt viscosity or a solution viscosity of the ester-based resin composition is reduced while maintaining a good hydrolysis resistance thereof.

The aforementioned remarkable effect of the ester-based resin composition of the present invention is not attainable by using only one of the polycarbodiimides. More specifically, when only the aliphatic polycarbodiimide is compounded into the ester-based resin, the resulting ester-based resin composition can exhibit a very good hydrolysis resistance in an early stage owing to a high reactivity thereof. Whereas, in such a case, the ester-based resin composition also tends to suffer from considerable increase in melt viscosity or solution viscosity thereof. On the other hand, when only the xylylene-based polycarbodiimide is compounded into the ester-based resin, the resulting ester-based resin composition can be prevented from suffering from considerable increase in melt viscosity or solution viscosity thereof, but it is not possible to end-cap a carboxylic acid initially contained in the ester-based resin to a sufficient extent, so that the resulting ester-based resin composition tends to have an insufficient hydrolysis resistance in an early stage.

### (Compounding Ratios and Amounts)

In the present invention, the mass ratio of the aliphatic polycarbodiimide other than a xylylene-based aliphatic polycarbodiimide to the xylylene-based polycarbodiimide [(aliphatic polycarbodiimide other than xylylene-based aliphatic polycarbodiimide)/(xylylene-based polycarbodiimide)] is adjusted to from 0.1 to 10.0. When the mass ratio is less than 0.1, the resulting ester-based resin composition tends to be deteriorated in hydrolysis resistance in an early stage. On the other hand, when the mass ratio is more than 10.0, the resulting ester-based resin composition tends to suffer from considerable increase in melt viscosity or solution viscosity thereof, and tends to fail to attain a sufficient hydrolysis resistance subsequent to the early stage.

The above mass ratio is preferably from 0.5 to 7.0, more preferably from 1.0 to 5.0, and still more preferably from 2.0 to 4.0.

In the present invention, the aliphatic polycarbodiimide other than a xylylene-based aliphatic polycarbodiimide and the xylylene-based polycarbodiimide are preferably compounded in a total amount of from 0.1 to 10 parts by mass, more preferably from 0.2 to 7 parts by mass, and still more preferably from 0.3 to 5 parts by mass, on the basis of 100 parts by mass of the ester-based resin.

When the total amount of the aliphatic polycarbodiimide other than a xylylene-based aliphatic polycarbodiimide and the xylylene-based polycarbodiimide compounded is 0.1 part by mass or more, the resulting ester-based resin composition can readily exhibit a good hydrolysis resistance. On the other hand, when the total amount of the aliphatic polycarbodiimide other than a xylylene-based aliphatic polycarbodiimide and the xylylene-based polycarbodiimide compounded is 10 parts by mass or less, the resulting ester-based resin composition can be prevented from suffering from deterioration in transparency as well as damage to properties of the ester-based resin as the base resin.

### (Additives)

The ester-based resin composition may also be compounded with appropriate amounts of various additives such as pigments, fillers, leveling agents, surfactants, dispersants, ultraviolet absorbers, antioxidants, flame retardants and colorants, if required.

### (Production Process)

The ester-based resin composition of the present invention may be produced by compounding the aliphatic polycarbodiimide and the xylylene-based polycarbodiimide, together with optional additives that may be added if necessary, into the ester-based resin, and then melting and kneading the resulting mixture.

The melting and kneading procedure may be conducted using a mixer equipped with a heating means. The order of addition of the respective materials to the mixer is not particularly limited. However, it is preferred that the ester-based resin as the base resin is first charged and melted in the mixer, and then the aliphatic polycarbodiimide and the xylylene-based polycarbodiimide are charged, together with optional additives that may be added if necessary, into the mixer.

The aliphatic polycarbodiimide and the xylylene-based polycarbodiimide may be charged together at the same time. Alternatively, one of the polycarbodiimides may be first charged, and the other may be then charged. Furthermore, after preliminarily mixing the aliphatic polycarbodiimide and the xylylene-based polycarbodiimide with each other, the resulting mixture may be added to the molten ester-based resin.

The melting and kneading time may vary depending upon a shape and a rotating speed of a screw used, etc., and therefore is not particularly limited. The melting and kneading time is usually from about 1 to about 10 min. The melting and kneading temperature may also vary depending upon the kind of ester-based resin as the base resin, and is usually from about 150 to about 300°C.

The ester-based resin composition of the present invention can be prevented from suffering from considerable increase in melt viscosity thereof, and therefore can be enhanced in working efficiency upon melting and kneading.

### (Molded Article)

When obtaining a molded article from the ester-based resin composition of the present invention, the ester-based resin composition may be molded upon the above melting and kneading by an extrusion molding method, an injection molding method, a blow-molding method, etc. Alternatively, the ester-based resin composition of the present invention may be compounded into a master batch, etc., and then the resulting master batch may be melted and kneaded with the other materials, following by suitably molding the resulting kneaded material.

The ester-based resin composition of the present invention is free from considerable increase in melt viscosity thereof even when molded by any of the above methods, and therefore can exhibit a good working efficiency. In addition, the molded article obtained from the ester-based resin composition of the present invention has a good hydrolysis resistance, and therefore is excellent in various properties such as a strength.

### Examples

The present invention will be described in more detail below by referring to the following Examples and Comparative Examples. It should be noted, however, that the following Examples, etc., are only illustrative and not intended to limit the invention thereto.

### [Evaluation Items]

### (1) Solution Viscosity (Intrinsic Viscosity) of Ester-Based Resin Composition

### [Polyester Resin (PET): Examples 1 to 9 and Comparative Examples 1 to 4]

A polyester resin (PET) was melted and kneaded, and then dried at 130°C for 4 h. Then, 0.15 g of the dried resin was dissolved in 30 mL of a mixed solvent containing phenol and tetrachloroethane at a ratio of 1:1, and the viscosity of the resulting solution was measured at 30°C using a Cannon-Fenske viscometer. The unit of the viscosity was (dL/g).

### [Polylactic Acid Resin (PLA): Examples 10 and 11 and Comparative Examples 5 and 6]

A polylactic acid resin (PLA) was melted and kneaded, and then dried at 110°C for 4 h. Then, 0.15 g of the dried resin was dissolved in 30 mL of chloroform, and the viscosity of the resulting solution was measured at 30°C using a Cannon-Fenske viscometer. The unit of the viscosity was (dL/g).

### (2) Melt Viscosity (Melt Flow Rate) of Ester-Based Resin

### [Polyester Resin (PET): Examples 1 to 9 and Comparative Examples 1 to 4]

A polyester resin (PET) was melted and kneaded, and then dried at 130°C for 4 h. Then, the dried resin was melted at 270°C to measure a melt flow rate thereof using a melt viscosity measuring device ("Melt Flow Indexer" available from Ueshima Seisakusho Co., Ltd.). The unit of the melt flow rate was (g/10 min).

### [Polylactic Acid Resin (PLA): Examples 10 and 11 and Comparative Examples 5 and 6]

A polylactic acid resin (PLA) was melted and kneaded, and then dried at 110°C for 4 h. Then, the dried resin was melted at 190°C to measure a melt flow rate thereof using a melt viscosity measuring device ("Melt Flow Indexer" available from Ueshima Seisakusho Co., Ltd.). The unit of the melt flow rate was (g/10 min).

### (3) Hydrolysis Resistance Test

### [Polyester Resin (PET): Examples 1 to 9 and Comparative Examples 1 to 4]

A polyester resin (PET) was melted and kneaded, and then pressed into a flat sheet at a temperature not lower than a softening point of PET, thereby obtaining a sheet having a thickness of about 300 µm. The thus obtained sheet was cut into a sheet strip having a width of 10 mm and a length of 70 mm. Next, the resulting sheet strip was subjected to tensile test using a tensile tester to measure a tensile strength thereof. Further, the sheet strip was placed in a highly accelerated life tester ("HAST CHAMBER" available from ESPEC Corporation) and allowed to stand therein at 121°C and 100% RH. After the elapse of each of 24 h and 40 h, the sheet strip as a sample was taken out of the tester, and subjected to measurement of a tensile strength thereof using a tensile tester. The tensile strengths of the five sheet strips were measured before and after the test, respectively, to calculate an average value of the thus measured tensile strengths, and a ratio of the average value of the tensile strengths after the test to the average value of the tensile strengths before the test [(average value of tensile strengths after test)/(average value of tensile strengths before test)] (strength retention rate) was determined and used as an evaluation index of a hydrolysis resistance of the resin.

### [Polylactic Acid Resin (PLA): Examples 10 and 11 and Comparative Examples 5 and 6]

A polylactic acid resin (PLA) was melted and kneaded, and then pressed into a flat sheet at a temperature not lower than a softening point of PLA, thereby obtaining a sheet having a thickness of about 300 µm. The thus obtained sheet was cut into a sheet strip having a width of 10 mm and a length of 70 mm. Next, the resulting sheet strip was subjected to tensile test using a tensile tester to measure a tensile strength thereof. Further, the sheet strip was placed in a thermo-hygrostat (available from ESPEC Corporation) and allowed to stand therein at 80°C and 95% RH. After the elapse of each of 24 h and 40 h, the sheet strip as a sample was taken out of the tester, and subjected to measurement of a tensile strength thereof using a tensile tester. The tensile strengths of the five sheet strips were measured before and after the test, respectively, to calculate an average value of the thus measured tensile strengths, and a ratio of the average value of the tensile strengths after the test to the average value of the tensile strengths before the test [(average value of tensile strengths after test)/(average value of tensile strengths before test)] (strength retention rate) was determined as an evaluation index of a hydrolysis resistance of the resin.

### [Synthesis Example 1] Synthesis of Aliphatic Polycarbodiimide

A reaction vessel equipped with a reflux condenser and a stirrer was charged with 100 parts by mass of 4,4'-dicyclohexylmethane diisocyanate and 0.5 part by mass of a carbodiimidation catalyst (3-methyl-1-phenyl-2-phospholene-1-oxide), and the contents of the reaction vessel were stirred at 185°C in a nitrogen gas flow for 15 h, thereby obtaining an isocyanate-terminated 4,4'-dicyclohexylmethane carbodiimide.

As a result of subjecting the resulting reaction product to measurement of infrared (IR) absorption spectrum, an absorption peak attributed to a carbodiimide group at a wavelength of about 2150 cm⁻¹ was observed. In addition, as a result of measurement of a percentage (%) of NCO in the reaction product, it was confirmed that the NCO percentage (%) was 4.88% (average degree of polymerization: 6.7).

Next, the resulting isocyanate-terminated 4,4'-dicyclohexylmethane carbodiimide was heated to 120°C, and then 40 parts by mass of polyethylene glycol monomethyl ether (average molecular weight: 400) was added thereto, and the resulting mixture was heated to 150°C and reacted at that temperature for 5 h while stirring.

The reaction mixture was subjected to measurement of infrared (IR) absorption spectrum, and after confirming dissipation of IR absorption of an isocyanate group at a wavelength of 2200 to 2300 cm⁻¹ (end-capping of an isocyanate end group), the resulting reaction product was taken out of the reaction vessel, and cooled to room temperature, thereby obtaining a light-yellow transparent viscous aliphatic polycarbodiimide.

### [Synthesis Example 2] Synthesis of Xylylene-Based Polycarbodiimide

A reaction vessel equipped with a reflux condenser and a stirrer was charged with 100 parts by mass of m-tetramethyl xylylene diisocyanate and 2 parts by mass of a carbodiimidation catalyst (3-methyl-1-phenyl-2-phospholene-1-oxide), and the contents of the reaction vessel were stirred at 180°C in a nitrogen gas flow for 32 h, thereby obtaining an isocyanate-terminated tetramethyl xylylene carbodiimide.

As a result of subjecting the resulting reaction product to measurement of infrared (IR) absorption spectrum, an absorption peak attributed to a carbodiimide group at a wavelength of about 2150 cm⁻¹ was observed. In addition, as a result of measurement of a percentage (%) of NCO in the reaction product, it was confirmed that the NCO percentage (%) was 3.75% (average degree of polymerization: 10.0).

Next, the resulting isocyanate-terminated tetramethyl xylylene carbodiimide was heated to 120°C, and then 38 parts by mass of polyethylene glycol monomethyl ether (average molecular weight: 500) was added thereto, and the resulting mixture was heated to 150°C and reacted at that temperature for 6 h while stirring.

The reaction mixture was subjected to measurement of infrared (IR) absorption spectrum, and after confirming dissipation of IR absorption of an isocyanate group at a wavelength of 2200 to 2300 cm⁻¹ (end-capping of an isocyanate end group), the resulting reaction product was taken out of the reaction vessel, and cooled to room temperature, thereby obtaining a light-yellow transparent viscous xylylene-based polycarbodiimide.

### [Example 1]

100 parts by mass of a PET resin available from China Petroleum and Chemical Corporation was melted at 270°C using a Lab Mixer, and then 0.9 part by mass of the aliphatic polycarbodiimide obtained in Synthesis Example 1 and 0.1 part by mass of a xylylene-based polycarbodiimide "Elastostab H01" (average molecular weight: 2200; average degree of polymerization: about 4) available from BASF Polyurethanes GmbH were added thereto at the same time, and the resulting mixture was kneaded for 3 min, thereby obtaining an ester-based resin composition.

### [Examples 2 to 7] and [Comparative Examples 1 to 4]

The same procedure as in Example 1 was repeated except that the amounts of the aliphatic polycarbodiimide and the xylylene-based polycarbodiimide compounded were changed as shown in Table 1, thereby obtaining ester-based resin compositions. Meanwhile, in Table 1, "-" means that the amount of the component added is zero (0).

### [Examples 8 and 9]

The same procedure as in Example 1 was repeated except that the xylylene-based polycarbodiimide used was replaced with the xylylene-based polycarbodiimide obtained in Synthesis Example 2, and the amounts of the respective components compounded were changed as shown in Table 1, thereby obtaining ester-based resin compositions.

**[Table 1]**

| | Ester-based resin composition | | | | Intrinsic viscosity (dL/g) | Melt flow rate (g/10 min) | Strength retention rate (24 h) | Strength retention rate (40 h) |
|---|---|---|---|---|---|---|---|---|
| | Ester-based resin (PET) | Aliphatic polycarbodiimide (Synthesis Example 1) | Xylylene-based polycarbodiimide ("Elastostab H01") | Xylylene-based polycarbodiimide (Synthesis Example 2) | | | | |
| Example 1 | 100 | 0.90 | 0.10 | - | 0.80 | 22.1 | 73 | 20 |
| Example 2 | 100 | 0.85 | 0.15 | - | 0.79 | 22.5 | 70 | 23 |
| Example 3 | 100 | 0.80 | 0.20 | - | 0.78 | 24.3 | 69 | 20 |
| Example 4 | 100 | 0.75 | 0.25 | - | 0.76 | 27.4 | 69 | 21 |
| Example 5 | 100 | 0.70 | 0.30 | - | 0.74 | 30.2 | 63 | 22 |
| Example 6 | 100 | 0.60 | 0.40 | - | 0.72 | 32.6 | 57 | 22 |
| Example 7 | 100 | 0.40 | 0.60 | - | 0.68 | 38.3 | 53 | 21 |
| Example 8 | 100 | 0.80 | - | 0.20 | 0.79 | 23.0 | 70 | 21 |
| Example 9 | 100 | 0.70 | - | 0.30 | 0.76 | 29.5 | 64 | 23 |
| Comparative Example 1 | 100 | 1.00 | - | - | 0.83 | 18.6 | 75 | 19 |
| Comparative Example 2 | 100 | 0.95 | 0.05 | - | 0.83 | 19.2 | 73 | 18 |
| Comparative Example 3 | 100 | 0.05 | 0.95 | - | 0.60 | 47.8 | 35 | 13 |
| Comparative Example 4 | 100 | 0.00 | - | - | 0.59 | 47.6 | 21 | 9 |

### (Consideration of Results)

As is apparent from the results of Table 1, it was confirmed that the ester-based resin compositions of Examples 1 to 9 in which the aliphatic polycarbodiimide and the xylylene-based polycarbodiimide were compounded at the specific ratios were excellent in balance between a hydrolysis resistance, a solution viscosity and a melt viscosity thereof as compared to the ester-based resin compositions of Comparative Examples 1 to 4.

More specifically, it was confirmed that the ester-based resin compositions of Examples 1 to 9 exhibited a low solution viscosity and a low melt viscosity and therefore were excellent in processing suitability as compared to the ester-based resin composition of Comparative Example 1 in which only the aliphatic polycarbodiimide was used as the polycarbodiimide component, and the ester-based resin composition of Comparative Example 2 in which the content of the aliphatic polycarbodiimide in the polycarbodiimide component was extremely large. Further, when comparing the strength retention rate after the elapse of 40 h of the respective ester-based resin compositions of Comparative Examples 1 and 2 with that of the respective ester-based resin compositions of Examples 1 to 9, it was confirmed that the ester-based resin compositions of Examples 1 to 9 had an enhanced strength retention rate and therefore were excellent in hydrolysis resistance. From the above consideration, it was confirmed that the ester-based resin compositions of Examples 1 to 9 were not only excellent in hydrolysis resistance, but also exhibited a low solution viscosity and a low melt viscosity as well as an excellent processing suitability as compared to the ester-based resin compositions of Comparative Examples 1 and 2.

In addition, in comparison with the ester-based resin composition of Comparative Example 3 in which the content of the xylylene-based polycarbodiimide in the polycarbodiimide component was extremely large and the ester-based resin composition of Comparative Example 4 in which no polycarbodiimide was used, the ester-based resin compositions of Examples 1 to 9 exhibited slightly high solution viscosity and melt viscosity, but had a strength retention rate that was as high as 1.5 times those of Comparative Examples 3 and 4, and therefore it was confirmed that the ester-based resin compositions of Examples 1 to 9 were extremely excellent in hydrolysis resistance. From the above consideration, it was confirmed that the ester-based resin compositions of Examples 1 to 9 were excellent in balance between a hydrolysis resistance, a solution viscosity and a melt viscosity as compared to the ester-based resin compositions of Comparative Examples 3 and 4.

Meanwhile, the larger intrinsic viscosity value as measured indicates a higher solution viscosity, and the larger melt flow rate value as measured indicates a lower melt viscosity.

### [Example 10]

One hundred parts by mass of a PLA resin available from Nature Works LLC was melted at 200°C using a Lab Mixer, and then 0.8 part by mass of the aliphatic polycarbodiimide obtained in Synthesis Example 1 and 0.2 part by mass of a xylylene-based polycarbodiimide "Elastostab H01" (average molecular weight: 2200; average degree of polymerization: about 4) available from BASF Polyurethanes GmbH were added thereto at the same time, and the resulting mixture was kneaded for 3 min, thereby obtaining an ester-based resin (PLA) composition.

### [Example 11] and [Comparative Examples 5 and 6]

The same procedure as in Example 10 was repeated except that the xylylene-based polycarbodiimide used was replaced with the xylylene-based polycarbodiimide obtained in Synthesis Example 2, and the amounts of the respective components compounded were changed as shown in Table 2, thereby obtaining ester-based resin compositions. Meanwhile, in Table 2, "-" means that the amount of the component added is zero (0).

**[Table 2]**

| | Ester-based resin composition | | | | Intrinsic viscosity (dL/g) | Melt flow rate (g/10 min) | Strength retention rate (24 h) | Strength retention rate (40 h) |
|---|---|---|---|---|---|---|---|---|
| | Ester-based resin (PLA) | Aliphatic polycarbodiimide (Synthesis Example 1) | Xylylene-based polycarbodiimide ("Elastostab H01") | Xylylene-based polycarbodiimide (Synthesis Example 2) | | | | |
| Example 10 | 100 | 0.80 | 0.20 | - | 1.28 | 2.7 | 77 | 25 |
| Example 11 | 100 | 0.80 | - | 0.20 | 1.29 | 2.5 | 75 | 24 |
| Comparative Example 5 | 100 | 1.00 | - | - | 1.33 | 2.0 | 80 | 23 |
| Comparative Example 6 | 100 | - | - | - | 1.24 | 4.0 | 30 | 2 |

### (Consideration of Results)

From the results shown in Table 2, it was confirmed that even when using the polylactic acid resin (PLA) as the ester-based resin, the ester-based resin compositions of Examples 10 and 11 in which the aliphatic polycarbodiimide and the xylylene-based polycarbodiimide were contained in the specific ratios were excellent in balance between a hydrolysis resistance, a solution viscosity and a melt viscosity thereof as compared to the ester-based resin compositions of Comparative Examples 5 and 6.

### Industrial Applicability

The ester-based resin composition according to the present invention not only can exhibit a good hydrolysis resistance, but also can be prevented from suffering from considerable increase in melt viscosity and solution viscosity, and therefore it is possible to produce an ester-based resin molded article having various excellent properties from the ester-based resin composition. Thus, the ester-based resin composition according to the present invention is useful in view of a good working efficiency thereof upon production of the molded article.

## Claims

1. An ester-based resin composition comprising an ester-based resin, an aliphatic polycarbodiimide other than a xylylene-based aliphatic polycarbodiimide, and a xylylene-based polycarbodiimide,
wherein the aliphatic polycarbodiimide other than the xylylene-based aliphatic polycarbodiimide is a polycarbodiimide containing at least two carbodiimide groups in a molecule thereof and being derived from at least one kind of an aliphatic diisocyanate compound other than a xylylene-based aliphatic diisocyanate compound, the aliphatic diisocyanate compound being an isocyanate compound containing two isocyanate groups in a molecule thereof which are directly bonded to carbon atoms other than those carbon atoms present in an aromatic ring,
wherein the xylylene-based polycarbodiimide comprises a repeating unit represented by the general formula (2): 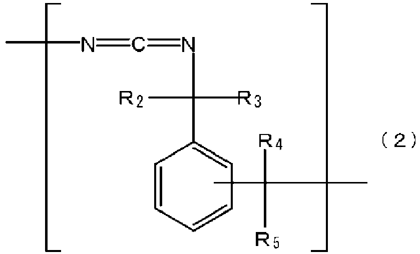 wherein R₂ to R₅ are respectively hydrogen, a methyl group or an ethyl group, and may be the same or different from each other, and
wherein a mass ratio of the aliphatic polycarbodiimide other than a xylylene-based aliphatic polycarbodiimide to the xylylene-based polycarbodiimide [(aliphatic polycarbodiimide other than xylylene-based aliphatic polycarbodiimide)/(xylylene-based polycarbodiimide)] being from 0.1 to 10.0.

2. The ester-based resin composition according to claim 1, wherein the aliphatic polycarbodiimide other than a xylylene-based aliphatic polycarbodiimide comprises a repeating unit represented by the general formula (1): 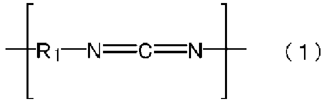 wherein R₁ is a residue formed by removing an isocyanate group from an aliphatic diisocyanate compound other than xylylene diisocyanate.

3. The ester-based resin composition according to claim 1 or 2, wherein the aliphatic polycarbodiimide other than a xylylene-based aliphatic polycarbodiimide and the xylylene-based polycarbodiimide are compounded in a total amount of from 0.1 to 10 parts by mass on the basis of 100 parts by mass of the ester-based resin.

4. The ester-based resin composition according to any one of claims 1 to 3, wherein the ester-based resin is at least one resin selected from the group consisting of polyethylene terephthalate, polybutylene terephthalate, polylactic acid, polybutylene succinate and a polyhydroxyalkanoic acid.

5. A process for producing an ester-based resin composition, comprising the steps of:
compounding an aliphatic polycarbodiimide other than a xylylene-based aliphatic polycarbodiimide and a xylylene-based polycarbodiimide into an ester-based resin,
wherein the aliphatic polycarbodiimide other than a xylylene-based aliphatic polycarbodiimide and the xylylene-based polycarbodiimide are both defined as in claim 1,
such that a mass ratio of the aliphatic polycarbodiimide other than a xylylene-based aliphatic polycarbodiimide to the xylylene-based polycarbodiimide [(aliphatic polycarbodiimide other than xylylene-based aliphatic polycarbodiimide)/(xylylene-based polycarbodiimide)] is from 0.1 to 10.0; and
melting and kneading a mixture obtained after the compounding.

6. A molded article using the ester-based resin composition as claimed in any one of claims 1 to 4.

## Patentansprüche

1. Esterbasierte Harzzusammensetzung umfassend ein esterbasiertes Harz, ein aliphatisches Polycarbodiimid, das kein xylylenbasiertes aliphatisches Polycarbodiimid ist, sowie ein xylylenbasiertes Polycarbodiimid,
wobei das aliphatische Polycarbodiimid, das kein xylylenbasiertes aliphatisches Polycarbodiimid ist, ein Polycarbodiimid ist, das zumindest zwei Carbodiimidgruppen in seinem Molekül aufweist und von zumindest einer Art von aliphatischer Diisocyanatverbindung abgeleitet ist, die keine xylylenbasierte aliphatische Diisocyanatverbindung ist, wobei die aliphatische Diisocyanatverbindung eine Isocyanatverbindung ist, die zwei Isocyanatgruppen in ihrem Molekül aufweist, die direkt an andere Kohlenstoffatome gebunden sind als jene Kohlenstoffatome, die in einem aromatischen Ring vorliegen,
wobei das xylylenbasierte Polycarbodiimid eine sich wiederholende Einheit umfasst, die durch folgende allgemeine Formel (2) dargestellt wird: 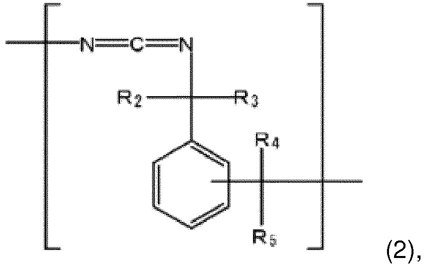 wobei R₂ bis R₅ jeweils Wasserstoff, eine Methylgruppe oder eine Ethylgruppe sind und jeweils gleich oder voneinander unterschiedlich sein können, und
wobei ein Massenverhältnis des aliphatischen Polycarbodiimids, das kein xylylenbasiertes aliphatisches Polycarbodiimid ist, und des xylylenbasierten Polycarbodiimids [(aliphatisches Polycarbodiimid, das kein xylylenbasiertes aliphatisches Polycarbodiimid ist) / (xylylenbasiertes Polycarbodiimid)] von 0,1 bis 10,0 ist.

2. Esterbasierte Harzzusammensetzung nach Anspruch 1, wobei das aliphatische Polycarbodiimid, das kein xylylenbasiertes aliphatisches Polycarbodiimid ist, eine sich wiederholende Einheit umfasst, die durch die allgemeine Formel (1) dargestellt wird: 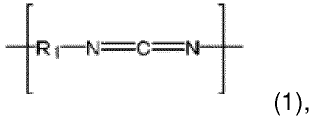 wobei R₁ ein Rest ist, der durch Entfernen einer Isocyanatgruppe aus einer aliphatischen Diisocyanatverbindung, die nicht Xylylendiisocyanat ist, gebildet wird.

3. Esterbasierte Harzzusammensetzung nach Anspruch 1 oder 2, wobei das aliphatische Polycarbodiimid, das kein xylylenbasiertes aliphatisches Polycarbodiimid ist, und das xylylenbasierte Polycarbodiimid in einer Gesamtmenge von 0,1 bis 10 Massenteilen bezogen auf 100 Massenteile des esterbasierten Harzes zusammengesetzt werden.

4. Esterbasierte Harzzusammensetzung nach einem der Ansprüche 1 bis 3, wobei das esterbasierte Harz zumindest ein Harz ausgewählt aus der Gruppe bestehend aus Polyethylenterephthalat, Polybutylenterephthalat, Polymilchsäure, Polybutylensuccinat und einer Polyhydroxyalkansäure ist.

5. Verfahren zur Herstellung einer esterbasierten Harzzusammensetzung, umfassend die folgenden Schritte:
Vermischen eines aliphatischen Polycarbodiimids, das kein xylylenbasiertes aliphatisches Polycarbodiimid ist, und eines xylylenbasierten Polycarbodiimids zu einem esterbasierten Harz,
wobei das aliphatische Polycarbodiimid, das kein xylylenbasiertes aliphatisches Polycarbodiimid ist, und das xylylenbasierte Polycarbodiimid beide nach Anspruch 1 definiert sind,
so dass ein Massenverhältnis des aliphatischen Polycarbodiimids, das kein xylylenbasiertes aliphatisches Polycarbodiimid ist, und des xylylenbasierten Polycarbodiimids [(aliphatisches Polycarbodiimid, das kein xylylenbasiertes aliphatisches Polycarbodiimid ist) / (xylylenbasiertes Polycarbodiimid)] von 0,1 bis 10,0 ist; und Schmelzen und Kneten einer Mischung, die nach dem Vermischen erhalten wird.

6. Formteil, welches die esterbasierte Harzzusammensetzung nach einem der Ansprüche 1 bis 4 verwendet.

## Revendications

1. Composition de résine à base d'esters, comprenant une résine à base d'esters, un polycarbodiimide aliphatique qui n'est pas de polycarbodiimide aliphatique à base de xylylène, et une polycarbodiimide à base de xylylène,
dans laquelle le polycarbodiimide aliphatique qui n'est pas de polycarbodiimide aliphatique à base de xylylène est un polycarbodiimide contenant au moins deux groupements carbodiimide dans sa molécule et étant dérivée d'au moins un type de composé de diisocyanate aliphatique qui n'est pas de composé de diisocyanate aliphatique à base de xylylène, le composé de diisocyanate aliphatique étant un composé d'isocyanate contenant deux groupements isocyanate dans sa molécule qui sont directement reliés aux atomes de carbone qui ne font pas partie d'un cycle aromatique,
dans laquelle le polycarbodiimide à base de xylylène comprend une unité répétitive représentée par la formula générale (2) : 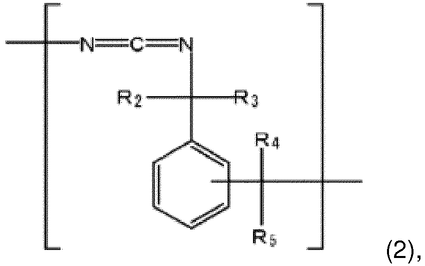 dans laquelle R₂ à R₅ sont respectivement l'hydrogène, un groupement méthyle ou un groupement éthyle, et peuvent être identiques ou différents les uns des autres, et
dans laquelle un rapport de masse du polycarbodiimide aliphatique qui n'est pas de polycarbodiimide aliphatique à base de xylylène et du polycarbodiimide à base de xylylène [(polycarbodiimide aliphatique qui n'est pas de polycarbodiimide aliphatique à base de xylylène) / (polycarbodiimide à base de xylylène)] est de 0,1 à 10,0.

2. Composition de résine à base d'esters selon la revendication 1, dans laquelle le polycarbodiimide aliphatique qui n'est pas de polycarbodiimide aliphatique à base de xylylène comprend une unité répétitive représentée par la formula générale (1) : 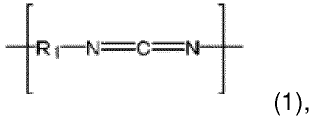 où R₁ est un radicale formé par élimination d'un groupement isocyanate d'un composé diisocyanate aliphatique autre que le xylylène diisocyanate.

3. Composition de résine à base d'esters selon la revendication 1 ou 2, dans laquelle le polycarbodiimide aliphatique qui n'est pas de polycarbodiimide aliphatique à base de xylylène et le polycarbodiimide à base de xylylène sont composés dans une quantité totale de 0,1 à 10 parties en masse par rapport à 100 parties en masse de la résine à base d'esters.

4. Composition de résine à base d'esters selon l'une quelconque des revendications 1 à 3, dans laquelle la résine à base d'esters est au moins une résine choisie dans le groupe consistant en le polyéthylène téréphtalate, le polybutylène téréphtalate, l'acide polylactique, le polybutylène succinate et un acide polyhydroxyalcanoique.

5. Procédé pour fabriquer une composition de résine à base d'esters, le procédé comprenant les étapes consistant à :
composer un polycarbodiimide aliphatique qui n'est pas de polycarbodiimide aliphatique à base de xylylène, et une polycarbodiimide à base de xylylène pour former une résine à base d'esters,
le polycarbodiimide aliphatique qui n'est pas de polycarbodiimide aliphatique à base de xylylène et le polycarbodiimide à base de xylylène étant définis selon la revendication 1,
de telle manière qu'un rapport de masse du polycarbodiimide aliphatique qui n'est pas de polycarbodiimide aliphatique à base de xylylène et du polycarbodiimide à base de xylylène [(polycarbodiimide aliphatique qui n'est pas de polycarbodiimide aliphatique à base de xylylène) / (polycarbodiimide à base de xylylène)] est de 0,1 à 10,0 ; et fondre et malaxer un mélange obtenu après la composition.

6. Article moulé utilisant la composition de résine à base d'esters selon l'une quelconque des revendications 1 à 4.
